(19) Europäisches Patentamt
European Patent Office
Office européen des brevets

(11) **EP 3 806 000 A1**

(12) **EUROPEAN PATENT APPLICATION**

(43) Date of publication:
**14.04.2021 Bulletin 2021/15**

(51) Int Cl.:
*G06N 20/10* $^{(2019.01)}$     *G06F 17/18* $^{(2006.01)}$

(21) Application number: **19202008.9**

(22) Date of filing: **08.10.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Secondmind Limited**
**Cambridge, Cambridgeshire CB2 1LA (GB)**

(72) Inventors:
- **SIMPSON, Fergus**
  **Cambridge, Cambridgeshire CB2 1LA (GB)**
- **DURRANDE, Nicolas**
  **Cambridge, Cambridgeshire CB2 1LA (GB)**

(74) Representative: **EIP**
**Fairfax House**
**15 Fulwood Place**
**London WC1V 6HU (GB)**

(54) **EFFICIENT COMPUTATIONAL INFERENCE**

(57)     A computer-implemented method of processing input data comprising a plurality of samples arranged on a regular grid within a finite sampling window, to train parameters for a kernel of a Gaussian process for modelling the data. The parameters are associated with a mixture of spectral components representing a spectral density of the kernel. The method includes: initialising the parameters; determining a cut-off frequency for delimiting a low-frequency range and a high-frequency range, the cut-off frequency being an integer multiple of a fundamental frequency corresponding to a reciprocal size of the sampling window; performing a discrete Fourier transform on the input data to determine frequency domain data; and processing a portion of the frequency domain data within the low-frequency range to determine smoothed input data. The method further includes iteratively: determining a discretised power spectrum for the kernel; generating a low-frequency covariance matrix from a portion of the discretised power spectrum within the low-frequency range; determining, using the smoothed input data and the low-frequency covariance matrix, a first log-likelihood component for the parameters given the smoothed input data; determining, using a portion of the discretised power spectrum within the high-frequency range, a second log-likelihood component for the parameters given a portion of the frequency domain data within the high-frequency range; and modifying the parameters to increase an objective function comprising the first log-likelihood component and the second log-likelihood component, wherein increasing the objective function increases a probability density associated with the parameters.

Fig. 2

**Description**

Technical Field

The present invention relates to the computational implementation of Gaussian process modelling techniques.

Background

Gaussian process (GP) models provide a powerful and flexible means of inferring statistical information from empirical data, offering strong guarantees of accuracy and automatically yielding well-calibrated uncertainty estimations. GP models have been applied in various contexts in machine learning, for example in regression and classification tasks, and for predicting states of an environment in a reinforcement learning system as described in European patent publications EP3467717 and EP3467718.

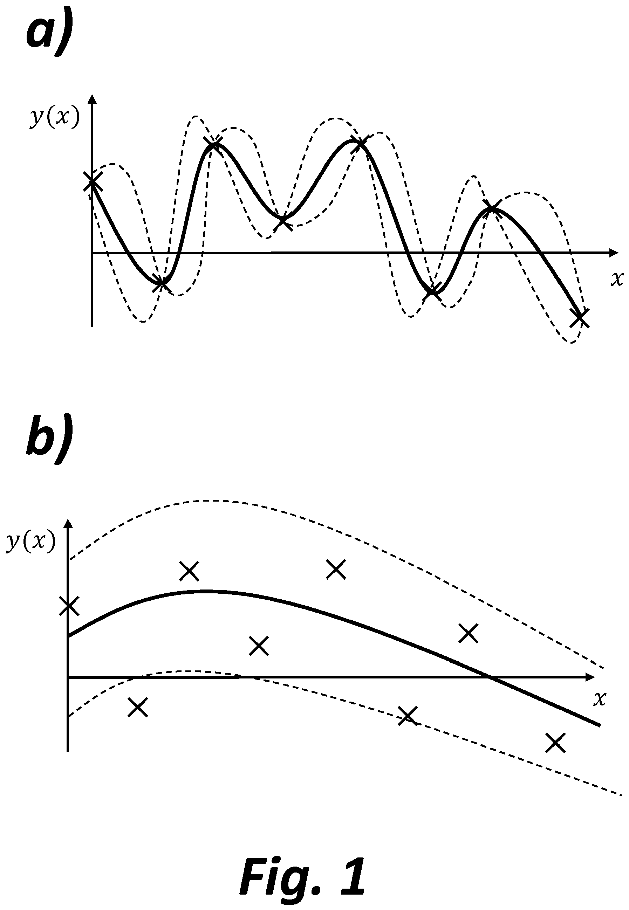

In a typical GP inference task, the objective is to fit a latent GP $y \sim \mathrm{GP}(0, K)$ to an observed dataset $\mathbf{D} = \{D_n\}_{n=1}^{N}$ sampled at input locations $\{x_n\}_{n=1}^{N}$. The resultant GP can be used to predict a distribution of an unobserved output value at a given input location $x^*$, and/or to determine properties of an unobservable latent signal underlying the data. The prior density $p(y)$ of the GP depends on a kernel $K(x,x')$ parameterised by a set of hyperparameters $\theta$. The kernel (also referred to as a covariance function) determines characteristics of how the GP varies as a function of the input locations $x$. Figures 1a and 1b show an illustrative example in which two GPs with different kernels have been fitted to a dataset containing measurements of a scalar quantity $y$ at eight evenly-spaced sampling locations. In each figure, the solid curve represents a mean function of the GP and the dashed curves represent standard deviations above and below the mean function. It is observed that the GP of Figure 1a varies on a shorter length scale than the GP of Figure 1b, and in this example, appears to better fit the dataset **D.**

During computational inference, kernel hyperparameters of a GP can be adjusted to best fit a given dataset, for example using maximum *a posteriori* (MAP) estimation or maximum likelihood estimation. Although these methods provide principled approaches for determining suitable hyperparameters for a kernel, the functional form of the kernel is typically specified by the user, and this choice can strongly affect the ability of the GP to fit the dataset. A good choice of kernel often requires *a priori* knowledge about patterns or structures expected within the data, and this knowledge is not always available.

It is known that any translation-invariant or stationary kernel $K(x - x') = K(r)$ can be represented in frequency space by a spectral density $P(v)$, also referred to as a power spectrum, which is a Fourier dual of the kernel. Determining an appropriate kernel for a given dataset is equivalent to inferring the spectral density of the kernel from the data. It was shown in Gaussian Process Kernels for Pattern Discovery and Extrapolation, A. Wilson and R. Adams, International Conference on Machine Learning, 2013, that by treating the spectral density as a mixture of Gaussian components in frequency space, and then optimising these Gaussian components using maximum likelihood estimation, a tractable approximation can be determined for a wide range of stationary kernels, without *a priori* knowledge about the dataset to be modelled. In this way, model selection (i.e. selecting an appropriate kernel) is automated and free of user bias, allowing patterns and structures within data to be discovered in a truly *a posteriori* manner.

As mentioned above, the spectral density $P(v)$ of a stationary kernel $K(r)$ is a Fourier dual of the kernel, such that $K(r) = \mathcal{F}(P(v))$, with $\mathcal{F}$ denoting a Fourier transform. Restricting the spectral density to being symmetric such that $P(v) = P(-v)$ ensures that the resultant GP is real-valued. Following the prescription of Wilson and Adams, the spectral density can be approximated using a superposition of pairs of Gaussian distributions in frequency space, resulting in a spectral mixture as shown by Equation (1):

$$P(v) = \sum_{i=1}^{M} \frac{A_i}{2} [\mathcal{N}(v; \mu_i, \Sigma_i) + \mathcal{N}(v; -\mu_i, \Sigma_i)], \qquad (1)$$

where $\mathcal{N}(v, \mu_i, \Sigma_i)$ denotes a (possibly-multivariate) Gaussian distribution with mean $\mu_i$ and diagonal covariance $\Sigma_i$. The amplitude $A_i$, mean $\mu_i$, and covariance $\Sigma_i$ of each of the Gaussian distributions are parameters to be trained. The mixture of Gaussian distributions shown in Equation (1) is chosen because an expression for the Fourier transform can be derived in closed form, as shown by Equation (2):

$$K(r) = \sum_{i=1}^{M} A_i \exp(-2\pi^2 r^{\mathrm{T}} \Sigma_i r) \cos(2\pi \mu_i r). \tag{2}$$

The parameters $\theta = \{A_i, \mu_i, \Sigma_i\}_{i=1}^{M}$ can be trained to fit a given dataset using maximum likelihood estimation. However, computing the likelihood $p(\mathbf{D}|\theta)$ for the parameters $\theta$ given the dataset $\mathbf{D}$ requires inversion of a dense covariance matrix of size $N \times N$ with entries corresponding to evaluations of the kernel at the sampling locations of the data. This results in a computational cost that scales cubically with the number of datapoints, i.e. as $O(N^3)$. This poor scalability with regard to the computational cost prevents training of the kernel parameters from being viable for many real-world applications, including those involving very large datasets or in which data must be analysed in real-time or near real-time.

Summary

According to a first aspect of the present invention, there is provided a computer-implemented method of processing input data comprising a plurality of samples arranged on a regular grid within a finite sampling window, to train parameters for a kernel of a Gaussian process for modelling the data. The parameters are associated with a mixture of spectral components representing a spectral density of the kernel. The method includes: initialising the parameters; determining a cut-off frequency for delimiting a low-frequency range and a high-frequency range, the cut-off frequency being an integer multiple of a fundamental frequency corresponding to a reciprocal size of the sampling window; performing a discrete Fourier transform on the input data to determine frequency domain data; and processing a portion of the frequency domain data within the low-frequency range to determine smoothed input data. The method further includes iteratively: determining a discretised power spectrum for the kernel; generating a low-frequency covariance matrix from a portion of the discretised power spectrum within the low-frequency range; determining, using the smoothed input data and the low-frequency covariance matrix, a first log-likelihood component for the parameters given the smoothed input data; determining, using a portion of the discretised power spectrum within the high-frequency range, a second log-likelihood component for the parameters given a portion of the frequency domain data within the high-frequency range; and modifying the parameters to increase an objective function comprising the first log-likelihood component and the second log-likelihood component, wherein increasing the objective function increases a probability density associated with the parameters.

By partitioning the frequency domain into a high-frequency portion and a low-frequency portion, and determining separate log-likelihood components for each of these portions, highly efficient computational methods based on fast Fourier transforms can be used to deal with high-frequency Fourier modes within the data, whilst overall accuracy is maintained by performing exact inference for the low-frequency Fourier modes, which are not amenable to approximation due to strong interactions with the finite sampling window.

Further features and advantages of the invention will become apparent from the following description of preferred embodiments of the invention, given by way of example only, which is made with reference to the accompanying drawings.

Brief Description of the Drawings

Figures 1a and 1b show an example of two different Gaussian process models fit to a dataset comprising a series of evenly-spaced samples.
Figure 2 shows a data processing system arranged in accordance with an embodiment of the present invention.
Figures 3a and 3b show examples of regular grid within finite sampling windows.
Figure 4 is a flow diagram representing a method for processing data in accordance with an embodiment of the present invention.
Figure 5 is a schematic representation of a covariance matrix in accordance with an embodiment of the present invention.

Detailed Description

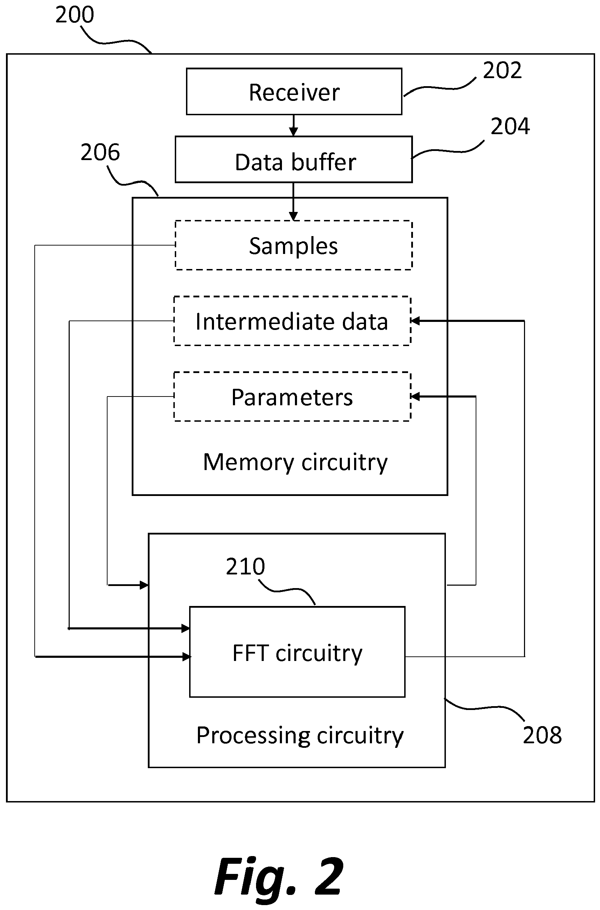

Figure 2 shows an example of a data processing system 200 arranged to perform computational inference in accordance with an embodiment of the present invention. The system includes various additional components not shown in Figure 2 such as input/output devices, a wireless network interface and the like. The data processing system 200 includes a receiver 202 which is arranged to receive data comprising samples arranged on a regular grid. The receiver may include, for example, a microphone receiver, a radio receiver, a network interface, a camera, a sensor, or any other component capable of receiving or generating data corresponding to a series of samples arranged on a regular grid.

The data processing system 200 includes a data buffer 204 for passing the received data to memory circuitry 206, which in this example includes volatile random-access memory (RAM), in particular static random-access memory (SRAM) and dynamic random-access memory (DRAM). In other examples, memory circuitry may further include non-volatile storage such as a solid state drive (SSD) or a hard disk drive (HDD).

The memory circuitry 206 is arranged to receive samples from the data buffer 204, either in a streamed or batch fashion, and to store the received samples along with parameters for a GP model and intermediate data used for training of the parameters.

The data processing system 200 includes processing circuitry 208, which in this example includes a CPU with one or more processor cores. In other examples, processing circuitry may include, additionally or alternatively, one or more application specific integrated circuits (ASICs) and/or specialist processing units such as a digital signal processor (DSP), a graphics processing unit (GPU), or a neural processing unit (NPU). The processing circuitry includes fast Fourier transform (FFT) circuitry 210, which is optimised to perform FFT or inverse FFT operations in one or more dimension. In this example, the FFT circuitry is a DSP loaded with an instruction set for performing the FFT and inverse FFT operations. In other examples, FFT circuitry may include, for example, a CPU provided with appropriate program code, or an ASIC.

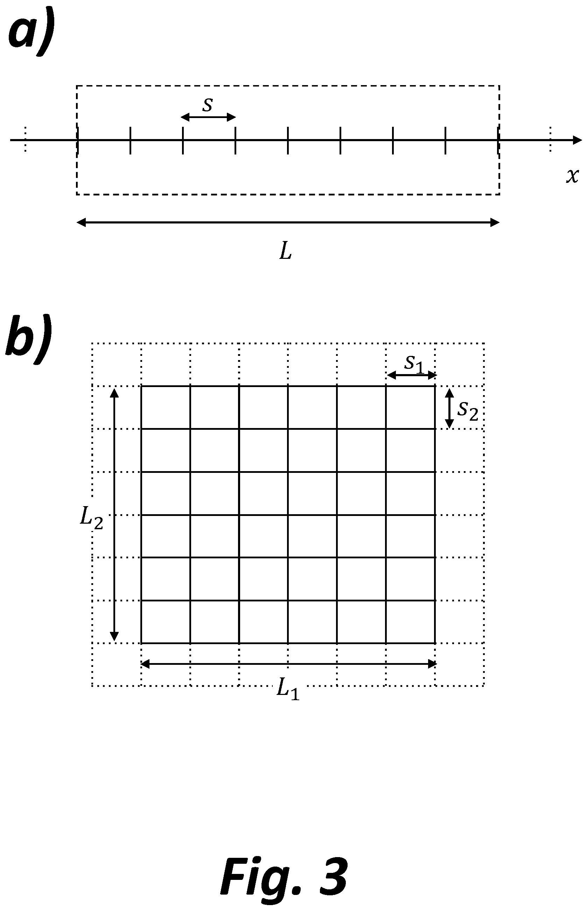

In accordance with the present invention, a computer-implemented method is provided to train parameters for a kernel of a GP for modelling data comprising samples arranged on a regular grid within a finite sampling window. The regular grid may be one-dimensional, in which case the samples are evenly spaced along an input axis, or may be multi-dimensional, in which case the samples are evenly spaced along each of a set of orthogonal input axes. Figure 3a shows an example of a one-dimensional regular grid with grid spacing s within a sampling window of length $L$. Figure 3b shows an example of a two-dimensional regular (rectangular) grid with grid spacing $s_1 \times s_2$ within a sampling window with dimensions $L_1 \times L_2$. In the example of Figure 3b, the grid is a square grid and the sampling window is a square sampling window. In other examples, the grid and/or sampling window may be rectangular with different lengths along the orthogonal axes of the grid. It will be appreciated that higher dimensional analogues are possible, and the present invention is applicable to any of these cases.

The parameters to be trained for the GP kernel are associated with a mixture of spectral components representing a spectral density of the kernel. In one example, the mixture of spectral components is a mixture of Gaussian distributions with diagonal covariance, as given by Equation (1). As explained above, this formulation is favourable from an implementation point of view, but for the present invention is not the only possible mixture of spectral components. Another example is a mixture of Gaussian distributions for which the covariance is unconstrained. A further example is a mixture of rectangular functions or higher-dimensional analogues, in which case the parameters to be trained are the amplitudes, positions, and widths of the rectangles. It is an objective of the present application to provide a method of training the parameters of the chosen spectral mixture in an efficient, scalable manner, by making use of fast Fourier transform (FFT) computation techniques.

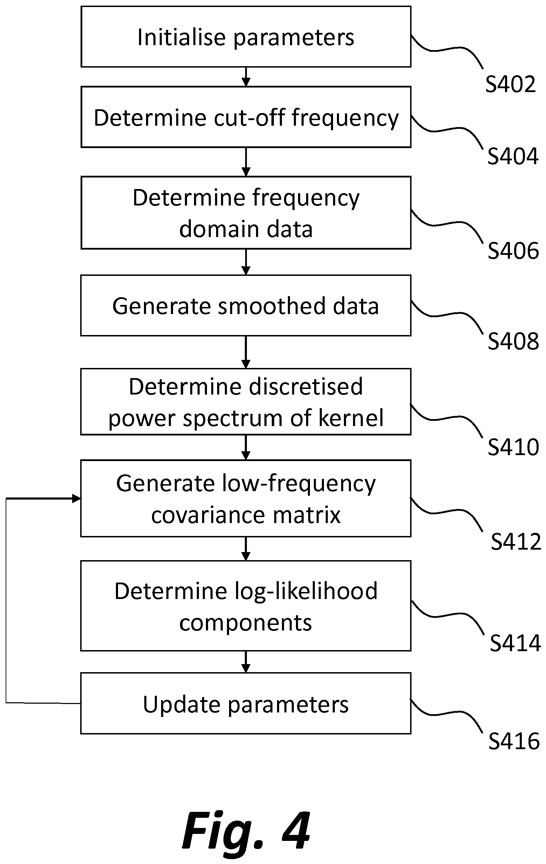

Figure 4 shows an example of a method performed by the data processing system 200 to process input data comprising samples arranged on a one-dimensional regular grid within a finite sample window in accordance with an embodiment of the present invention. Before the method of Figure 4 is performed, the input data is stored in the memory circuitry 206, for example after being received by the receiver 202.

The data processing system 200 initialises, at S402, a set of parameters $\theta$ associated with a mixture of spectral components representing a spectral density of the kernel. In the example of a mixture of Gaussian components in one dimension, the parameters are given by $\theta = \{A_i, \mu_i, \sigma_i^2\}_{i=1}^M$, where $\sigma_i^2$ is the variance of the $i$th Gaussian component. In some examples, the parameters are initiated randomly, whereas in other examples, the parameters are initiated deterministically. In some examples, an initial estimate of the parameters is determined by modifying the data by multiplication with a window function, for example a Hann window or any other suitable window function, and using the spectrum of the modified data to determine an initial estimate of the parameters. In some examples, a low-frequency component is initialised at a far lower frequency than a fundamental frequency associated with the sampling window. For a one-dimensional sampling window of length $L$, the fundamental frequency may be defined as a reciprocal of the sampling window size, i.e. $L^{-1}$. A low-frequency spectral component may be initialised with $\mu_i \ll L^{-1}$, for example $\mu_i = 0.01L^{-1}$ or any other suitably small fraction of the fundamental frequency.

The data processing system 200 determines, at S404, a cut-off frequency for delimiting two frequency regimes - a high-frequency regime and a low-frequency regime. The cut-off frequency is an integer multiple of the fundamental frequency associated with the sampling window. For a one-dimensional sampling window, the cut-off frequency is therefore given by $v_c = mL^{-1}$ for an integer $m \in \mathbb{Z}^{+}$. In the present example, the low-frequency regime includes all frequencies less than or equal to the cut-off frequency, and the high-frequency regime includes all frequencies greater than the cut-off frequency. In other examples, the high-frequency regime may include the cut-off frequency.

In some examples, the cut-off frequency is predetermined, for example, as a fixed integer multiple of the fundamental frequency, such as 4, 8, 12, 20 or 32 times the fundamental frequency, or any other suitable integer times the fundamental frequency. In other examples, the cut-off frequency is specified by a user of the data processing system 200, allowing the user to control the trade-off between accuracy and computation time. In further examples, the cut-off frequency is determined by the data processing system 200 in dependence on, for example, the size of the dataset. In one specific example, the integer $m$ is chosen using the relationship $m = \lfloor C(N \log N)^{1/3} \rfloor$, where $C$ is a predetermined or user-selected constant and $\lfloor \cdot \rfloor$ denotes the floor function (or alternatively, the ceiling function or nearest integer function). This choice provides a heuristic trade-off between speed and accuracy, as will be explained in more detail hereafter.

Advantageously, the cut-off frequency may be determined as an integer multiple of a power of two times the fundamental frequency, i.e. $m = p \times 2^q$ for positive integers $p$ and $q$. As will be explained in more detail hereafter, the present method can be performed using FFT and inverse FFT algorithms, which are straightforwardly implemented for sequences with lengths equal to an integer multiple of a power of two using radix-2 FFT algorithms. Suitable FFT algorithms are also known for other sizes of dataset, and therefore the present method is not limited to such choices of $m$. In a specific example, $m$ is determined as the largest integer for which $m = p \times 2^q$ and $m < (N \log N)^{1/3}$

The data processing system 200 determines, at S406, frequency domain data **F** representing the input data **D**. The frequency domain data includes a first portion $\mathbf{F_L}$ within the low-frequency regime and a second portion $\mathbf{F_H}$ within the high-frequency regime. The frequency domain data is determined by performing a discrete Fourier transform (DFT) on the data **D,** as shown by Equation (3):

$$\mathrm{DFT}(\mathbf{D}) \equiv \left\{ \sum_{n=0}^{N-1} D[n] \exp\left(-\frac{2\pi i k n}{N}\right) \right\}_{k=0}^{N-1}, \qquad (3)$$

$$\mathbf{F_L} = \left\{ \mathrm{DFT}(\mathbf{D})_j \right\}_{j=1}^{m}, \qquad \mathbf{F_H} = \left\{ \mathrm{DFT}(\mathbf{D})_j \right\}_{j=m+1}^{N},$$

in which square brackets are used to denote indices running from zero to $N - 1$ and subscripts are used to denote indices running from 1 to $N$. Advantageously, the DFT of Equation (3) is evaluated using an FFT algorithm, resulting in a computational cost of $O(N \log N)$ operations, as opposed to $O(N^2)$ operations which would be required to perform the DFT naively. In the present implementation, the data processing system 200 performs the FFT using FFT circuitry 210.

The data processing system 200 generates, at S408, smoothed data $\mathbf{D_L}$ which captures information encapsulated by the low-frequency portion $\mathbf{F_L}$ of the frequency domain data. The smoothed data $\mathbf{D_L}$ is generated by performing an inverse DFT on the low-frequency portion of the frequency domain data, as shown by Equation (4):

$$\mathbf{D_L} = \mathrm{DFT}^{-1}(\mathbf{F_L}) \equiv \left\{ \sum_{k=0}^{m-1} F_L[k] \exp\left(\frac{2\pi i k n}{N}\right) \right\}_{n=0}^{m-1}. \qquad (4)$$

In the present implementation, the data processing system 200 performs the inverse DFT as an inverse FFT using FFT circuitry 210. The smoothed data has an associated low-resolution grid of input locations, which may or may not correspond to a subset of the input locations of the input data (depending on the value of $m$).

The data processing system 200 determines, at S410, a discretised power spectrum for the kernel. In this example, determining the discretised power spectrum includes first determining a covariance structure formed of evaluations of the kernel $K$ at grid spacings of the regular grid within the finite sampling window. In the example of a one-dimensional grid $\mathbf{r} = (0, s, 2s,..., (N - 1)s)$ of $N$ sample locations separated by a grid spacing s, the covariance structure is a sequence of length $N$ given by $K(\mathbf{r}) = (K(0), K(s), K(2s), ...,K((N - 1)s))$. The elements of the covariance structure are thus determined by evaluating the kernel at the various spacings between samples. The kernel, and therefore the covariance structure, is dependent on the parameters $\theta$ of the kernel.

The data processing system 200 determines the discretised power spectrum of the kernel by performing an inverse DFT on data derived from the covariance structure $K(\mathbf{r})$. Specifically, the discretised power spectrum $P_c(\mathbf{v})$ is

given by Equation (5):

$$P_{\mathrm{c}}(\mathbf{v}) = \mathrm{DFT}^{-1}\left( \mathrm{tri}\left(\frac{\mathbf{r}}{L}\right) \times K(\mathbf{r}) \right), \tag{5}$$

where $\mathrm{tri} \equiv \max(1 - |x|, 0)$ denotes the triangle function and the multiplication is element-wise. The vector of frequencies $\mathbf{v}$ has elements $v_j = jL^{-1}$ for $j = 1, ..., N,$ and therefore $v_m = mL^{-1} = v_{\mathrm{c}}$. The triangle function in Equation (5) results from the finite size of the sampling window, and intuitively captures the fact that there are fewer examples of widely-separated pairs of samples than there are of closely-separated pairs of samples.

The data processing system 200 generates, at S412, a low-frequency covariance matrix $\mathbf{K}_{\mathrm{L}}$ of size $m \times m$. In the present example, generating the low-frequency covariance matrix involves first generating a low-frequency covariance structure $K_{\mathrm{L}}(\mathbf{r}_{\mathrm{L}})$, where $\mathbf{r}_{\mathrm{L}}$ is a vector of grid spacings on the low-resolution grid associated with the low-frequency data $\mathbf{D}_{\mathrm{L}}$. In the present example, the low-frequency covariance structure is generated by performing a DFT on a portion of the discretised power spectrum within the low-frequency regime, i.e. for which $v_j \leq v_c$, and is given by Equation (6):

$$K_{\mathrm{L}}(\mathbf{r}_{\mathrm{L}}) = \mathrm{DFT}\left( \{P_{\mathrm{c}}(v_j)\}_{j=1}^{m} \right) \times \mathrm{tri}^{-1}\left(\frac{\mathbf{r}_{\mathrm{L}}}{L}\right), \tag{6}$$

where the multiplication is performed elementwise. It is noted that the same low-frequency covariance structure can be generated by omitting the triangle function and inverse triangle function in Equations (5) and (6) respectively. However, the high-frequency portion of the discretised power spectrum in Equation (5) is required at a later stage, and therefore to make use of FFT techniques to perform the inverse DFT of Equation (5) it is advantageous to include the triangle function for all frequency components.

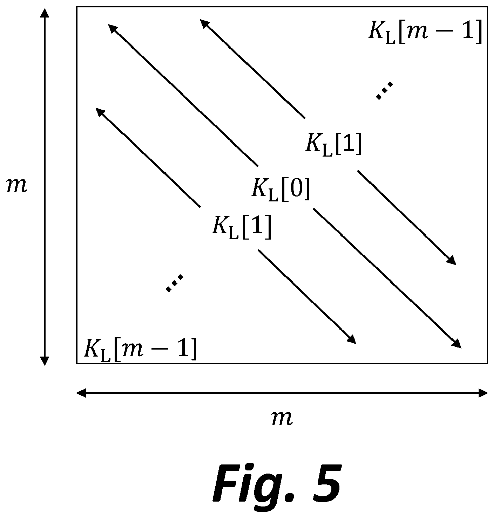

The low-frequency covariance matrix $\mathbf{K}_{\mathrm{L}}$ is determined by arranging the elements of the low-frequency covariance structure in accordance with the spacings between pairs of grid locations on the low-resolution grid, as shown in Figure 5 in which the arrows represent repeated elements (for example, the element $K_{\mathrm{L}}[0]$ is repeated along the leading diagonal).

The data processing system 200 determines, at S414, log-likelihood components including a first log-likelihood component $p(\mathbf{F}_{\mathrm{L}}|\theta)$ for the parameters $\theta$ given the low-frequency portion $\mathbf{F}_{\mathrm{L}}$ of the frequency domain data, and a second log-likelihood component $p(\mathbf{F}_{\mathrm{H}}|\theta)$ for the parameters given the high-frequency portion $\mathbf{F}_{\mathrm{H}}$ of the frequency domain data. The log-likelihood for the parameters given the data is then given by $p(\mathbf{D}|\theta) = p(\mathbf{F}|\theta) = p(\mathbf{F}_{\mathrm{L}}|\theta) + p(\mathbf{F}_{\mathrm{H}}|\theta, \mathbf{F}_{\mathrm{L}}) \approx p(\mathbf{F}_{\mathrm{L}}|\theta) + p(\mathbf{F}_{\mathrm{H}}|\theta)$.

The first log-likelihood component is given in closed form by Equation (7):

$$p(\mathbf{F}_{\mathrm{L}}|\theta) = -\frac{1}{2}\mathbf{D}_{\mathrm{L}}^{\mathrm{T}}\mathbf{K}_{\mathrm{L}}^{-1}\mathbf{D}_{\mathrm{L}} - \frac{1}{2}\log\det\mathbf{K}_{\mathrm{L}} - \frac{m}{2}\log\pi. \tag{7}$$

It can be seen that the first log-likelihood component is equivalent to the log-likelihood in the case of a conventional conjugate GP model, but with the full covariance matrix replaced with the low-frequency covariance matrix. The computational cost of evaluating the log-likelihood is dominated by the inversion of the $m \times m$ low-frequency covariance matrix, resulting in a computational cost of $O(m^3)$. By way of comparison, inverting the full covariance matrix, as in conventional conjugate GP inference, results in a computational cost of $O(N^3)$ operations. This cost renders such methods, including the method of Wilson and Adams mentioned in the background section, prohibitive for large datasets. For the present method, the value of $m$ can be chosen to ensure tractability in a reasonable amount of time, as discussed in further detail below.

In the present example, the second log-likelihood component $p(\mathbf{D}_{\mathrm{H}}|\theta) = p(\mathbf{F}_{\mathrm{H}}|\theta)$ is a log-density of a Rayleigh distribution truncated to exclude terms within the low-frequency regime. Assuming that the individual components of the high-frequency portion of the frequency domain data $\mathbf{F}_{\mathrm{H}}$ are independent Gaussian random variables leads to a Rayleigh-distributed likelihood for the corresponding spectral densities $P_{\mathrm{D}}(v_k) = |(\mathbf{F}_{\mathrm{H}})_k|^2$. This results in a second log-likelihood component given by Equation (8):

$$p(\mathbf{F}_{\mathrm{H}}|\theta) = \frac{1}{2} \sum_{i=m+1}^{N} \left( \log\left(\frac{P_{\mathrm{D}}(v_i)}{P_{\mathrm{c}}(v_i)}\right) - \frac{P_{\mathrm{D}}(v_i)}{P_{\mathrm{c}}(v_i)} \right). \tag{8}$$

The second log-likelihood component is an approximation in that it implicitly assumes the dataset is infinite and periodic. In other words, Equation (8) does not account for the finite size of the sampling window, which gives rise to spectral leakage and renders the expression inexact (except in the limit of uncorrelated data i.e. white noise). For high-frequency components, the likelihood is dominated by correlations between nearby data, and is relatively unaffected by the dataset being finite. By contrast, low-frequency components are strongly affected by the finite size of the sampling window, and therefore choosing a cut-off frequency $v_c$ which is too low tends to reduce the accuracy of the approximation.

The computational cost of determining the second log-likelihood component of Equation (8) is dominated by the DFT operations required to determine the spectral densities $P_{\mathrm{D}}(v_i)$ and $P_{\mathrm{c}}(v_i)$. In the present example, the data processing system 200 determines the spectral densities using FFT routines, resulting in a computational cost of $O(N \log N)$ operations. For large datasets, computing the approximation of Equation (8) is therefore significantly faster than determining the exact likelihood over the entire frequency range (i.e. by extending the cut-off frequency to infinity). A trade-off between accuracy and computational efficiency is therefore achieved by adjusting the cut-off frequency. Assuming that $m \ll (N \log N)^{1/3}$, the computational cost is dominated by the second likelihood component. A heuristic method of achieving accurate results without increasing the computational cost above $O(N \log N)$ is therefore to select $m = \lfloor C(N \log N)^{1/3} \rfloor$ for a predetermined value of $C$.

The data processing system 200 modifies, at S416, the parameters $\theta$ to increase an objective function $\mathcal{L}$ comprising the first log-likelihood component $\log p(\mathbf{F}_{\mathrm{L}}|\theta)$ and the second log-likelihood component $\log p(\mathbf{F}_{\mathrm{H}}|\theta)$. Increasing the objective function $\mathcal{L}$ increases a probability density associated with the parameters, which may either be the likelihood for the parameters given the data, or the posterior density for the parameters given the data, depending on the definition of the objective function.

In a first example, the objective function is given by an approximation of the log-likelihood $\log p(\mathbf{D}|\theta) = \log p(\mathbf{F}|\theta)$ for the parameters given the data, which is given by the sum $\mathcal{L} = \log p(\mathbf{F}_{\mathrm{H}}|\theta) + \log p(\mathbf{F}_{\mathrm{L}}|\theta).$ In this case, optimising the objective function with respect to the parameters corresponds to maximum likelihood estimation. In a second example, the objective function is given by an approximation of the log-posterior density $\log p(\theta|\mathbf{D}) = \log p(\theta|\mathbf{F})$ for the parameters given the data, which is given by the sum $\mathcal{L} = \log p(\mathbf{F}_{\mathrm{H}}|\theta) + \log p(\mathbf{F}_{\mathrm{L}}|\theta) + \log p(\theta) - \log p(\mathbf{F})$. In this case, optimising the objective function with respect to the parameters corresponds to maximum *a posteriori* (MAP) estimation. Compared with the maximum likelihood objective function, this objective function includes a log-prior density for the parameters and a log-marginal likelihood for the data. The log-marginal density does not depend on the parameters $\theta$ and can therefore be omitted from the objective function when performing MAP estimation. The log-prior density, on the other hand, does depend on the parameters $\theta$ can be used to encourage or penalise certain behaviour of the parameters. A specific example of a suitable log-prior density $\log p(\theta)$ will be described in more detail hereafter.

It will be appreciated that the parameters can be modified to increase the objective function using any suitable optimisation method, for example a gradient-based optimisation method. In the present example, the data processing system 200 implements the conjugate gradient method to modify the parameters. The steps S412 to S416 are repeated iteratively until predetermined convergence conditions are satisfied, or until a predetermined number of iterations have been performed.

The method described above results in computationally efficient, flexible GP inference in which FFT techniques can be used to dramatically reduce the computational cost of determining the likelihood for the parameters $\theta$ given the data **D**. For example, fitting a kernel with $M = 10$ Gaussian spectral components to a one-dimensional dataset of size $N = 500$, using a single central processing unit (CPU), is found to take under two seconds. For comparison, fitting the same kernel by inverting a dense covariance matrix of size $N \times N$, using the same CPU, takes approximately three minutes. For larger datasets, the increase in speed is even more dramatic. This improved scalability allows for GP modelling techniques to be utilised in situations in which the computational cost would previously have been prohibitive, given the available hardware.

It is noted that both the speed of convergence and the accuracy of the resulting GP model can be further improved by using MAP estimation and choosing an appropriate prior density for the parameters. In the example of a mixture of Gaussian components in one dimension, the parameters are given by $\theta = \{A_i, \mu_i, \sigma_i^2\}_{i=1}^{M}$, in which the diagonal covariances $\Sigma_i$ of Equation (1) have been replaced with scalar variance parameters $\sigma_i$. In the absence of any further information, an example of a suitable prior for the amplitudes $A_i$ is a uniform prior, which has no effect on the MAP estimation. An example of a suitable prior for the variance $\sigma_i^2$ is given by $p(\sigma_i^2/v_{\mathrm{NY}}^2) = v_{\mathrm{NY}}^2/\sigma_i^2$ for $-B < \log(\sigma_i^2/v_{\mathrm{NY}}^2) < B$, where $v_{\mathrm{NY}}$ is the Nyquist frequency given by $v_{\mathrm{NY}} = 1/(2s)$, with $s$ the spacing between sampling locations of the input data. $B$ is a parameter (which may be predetermined or user-selected), which is typically large, for example, $\log B = 10^6$.

An example of a suitable prior density for the mean $\mu_i$ is derived by mapping a uniform logarithmic prior (which is appropriate as there is generally a large *a priori* uncertainty in the length-scale of fluctuations in a given dataset) onto a folded domain to take account of aliasing of frequencies above the Nyquist frequency. The resulting density is given by Equation (9):

$$p(\mu_i/v_{\mathrm{NY}}) = \begin{cases} \dfrac{1}{2} & \text{for } \log(\mu_i/v_{\mathrm{NY}}) < -B, \\[2mm] \dfrac{1}{2} + \dfrac{v_{\mathrm{NY}}}{2\mu_i B} & \text{for } -B < \log(\mu_i/v_{\mathrm{NY}}) < 0, \\[2mm] 0 & \text{otherwise.} \end{cases} \qquad (9)$$

It will be appreciated that other priors are possible and may be more appropriate depending on the context. For example, in some cases a hierarchical prior may be used which links parameters of the different spectral components. This may be particularly suitable, for example, for modelling periodic behaviours which are associated with evenly-spaced, equally narrow spectral components.

Although the method of Figure 4 has been described above for a one-dimensional grid for the sake of clarity, the same method applies for data sampled on a multi-dimensional regular grid, such as the rectangular grid shown in Figure 3b. For a multi-dimensional sampling window of dimensions $L_1 \times ... \times L_d$, the fundamental frequency may be defined as $(L_1^2 + \cdots + L_d^2)^{-1/2}$ and the cut-off frequency by $v_c = m(L_1^2 + \cdots + L_d^2)^{-1/2}$. The co-ordinates $v$ in Fourier space are then multi-dimensional, and modes of the frequency domain data and the power spectrum of the kernel are partitioned into low-frequency modes for which $|v| \leq v_c$ and high-frequency modes for which $|v| > v_c$. The DFTs and inverse DFTs of Equations (3)-(6) become multi-dimensional DFTs and multi-dimensional inverse DFTs, which may be performed efficiently using multi-dimensional FFT routines.

The above methods have a wide range of applicability, with the input data being able to represent a broad range of physical quantities. For example, certain GP models are well-suited to the modelling of time-series data, for example audio data, telecommunication data, meteorological data, electrocardiogram (ECG) data, or other physiological measurements including measurements of neural activity in a human or animal brain. The inferred GP model may then be used to predict future or intermediate values, or to determine properties of a signal underlying the measurements, including uncertainty. In some examples, data such as time-series data may be received in a streaming fashion, and it may be desirable to perform inference in real-time or near real-time. In this way, trends can be extrapolated into the future, allowing for alarm warnings and/or control signals to be triggered in anticipation of a given event, for example a value of a certain physical quantity reaching a predetermined threshold value.

In the context of machine learning, performing inference in real-time on streamed data is referred to as on-line learning. In such cases, a moving window approach can be adopted in which a finite window of predetermined width is moved over the data (with a predetermined stride) and kernel parameters are inferred for each position of the finite window. For data streamed at a relatively high frequency, conventional GP inference methods are unsuitable for such applications due to the necessity to invert a dense matrix at each update step. By contrast, the present invention allows for the moving window approach to be implemented for data received at a much higher frequency, for example audio data.

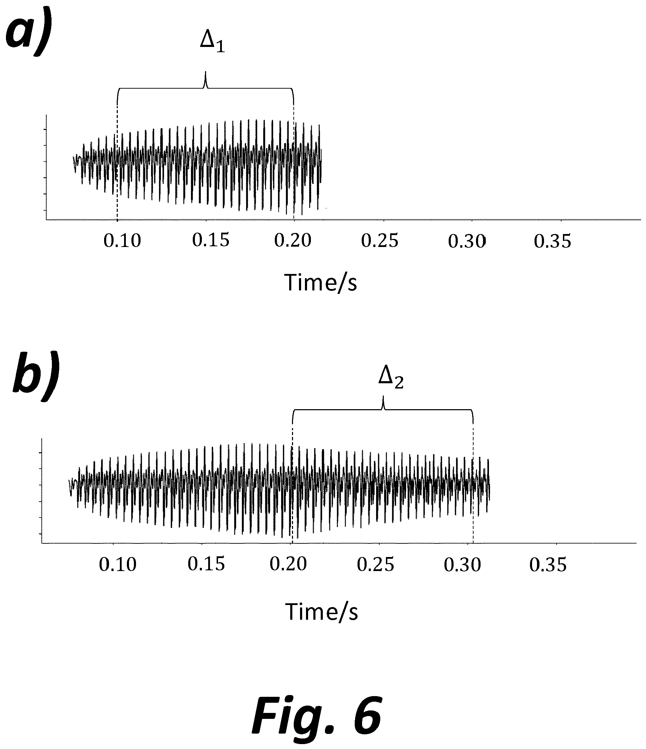

Figure 6 shows an example of a real sound file representing an uttered vowel from a female speaker sampled at fixed frequency of 16kHz. A vowel is typically a quasi-periodic signal where the pitch is fixed but the repeated temporal pattern varies with time. In the example of Figure 6, the audio signal is received by a microphone and analysed in near real-time using the method described herein. After samples have been received within the interval $0 < t < 0.2$s, a first GP is fitted to the 1600 samples in the interval $\Delta_1 = (0.1, 0.2]$ms by training parameters of a kernel using the method described above. In the interval $0.2$s $< t < 0.3$s, additional samples are received, and a further GP is fitted to the 1600 samples in the interval $\Delta_2 = (0.2, 0.3]$ms. In the present example, the kernel parameters for the interval $\Delta_1$ are used as an initial guess for the parameters for the interval $\Delta_2$. In this example, the intervals $\Delta_1$ and $\Delta_2$ are contiguous, non-overlapping, and of equal duration. In other examples, intervals may be overlapping and/or of different duration.

As described above, a finite window is moved over the data as the samples are received, resulting in a GP model that automatically adapts to changes in characteristics of the data (for example, the pitch of a voice or other sound in an audio signal). In order for near real-time analysis of data received in a streaming fashion, inference must be performed at substantially the same rate at which the data is received. The scalability provided by the present invention allows for this to be achieved for much higher frequency data. Furthermore, given that the scaling of the computational cost is only slightly higher than linear, the present invention allows for wider moving windows to be used without significantly reducing the frequency of data which can be handled.

The above embodiments are to be understood as illustrative examples of the invention. Further embodiments of the invention are envisaged. For example, methods described herein could be implemented using different hardware to that shown in Figure 2, for example using a distributed computing system, allowing for scalability to even larger datasets, for example to big data applications. In some examples, data within a sampling window may be only partially observed such that some of the data within the window are "missing". The method described herein is equally applicable in this situation, but with the triangle function of Equations (5) and (6) being replaced with a different function to account for the hidden regions of data.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1. A computer-implemented method of processing input data comprising a plurality of samples arranged on a regular grid within a finite sampling window, to train parameters for a kernel of a Gaussian process for modelling the data, wherein the parameters are associated with a mixture of spectral components representing a spectral density of the kernel, the method comprising:

   initialising the parameters;
   determining a cut-off frequency for delimiting a low-frequency range and a high-frequency range, the cut-off frequency being an integer multiple of a fundamental frequency corresponding to a reciprocal size of the sampling window;
   performing a discrete Fourier transform on the input data to determine frequency domain data;
   processing a portion of the frequency domain data within the low-frequency range to determine smoothed input data; and
   iteratively:

      determining a discretised power spectrum for the kernel;
      generating a low-frequency covariance matrix from a portion of the discretised power spectrum within the low-frequency range;
      determining, using the smoothed input data and the low-frequency covariance matrix, a first log-likelihood component for the parameters given the smoothed input data;
      determining, using a portion of the discretised power spectrum within the high-frequency range, a second log-likelihood component for the parameters given a portion of the frequency domain data within the high-frequency range; and
      modifying the parameters to increase an objective function comprising the first log-likelihood component and the second log-likelihood component, wherein increasing the objective function increases a probability density associated with the parameters.

2. The method of claim 1, wherein the second log-likelihood component is a log-density of a Rayleigh distribution truncated to exclude terms within the low-frequency range.

3. The method of claim 1 or 2, wherein the mixture of spectral components comprises a mixture of Gaussian components, and the parameters comprise a respective amplitude, a respective mean, and a respective variance for each of the Gaussian components in the mixture.

4. The method of claim 3, wherein:

the probability density associated with the parameters is a posterior probability density for the parameters given the input data; and

the objective function comprises a log-prior density for the parameters, the log-prior density corresponding to a uniform logarithmic prior mapped onto a folded domain to take account of aliasing of frequencies above a Nyquist frequency associated with a spacing of samples on the regular grid.

5. The method of any preceding claim, wherein the cut-off frequency is an integer multiple of a power of two times the fundamental frequency.

6. The method of any preceding claim, wherein determining the discretised power spectrum of the kernel comprises:

   generating a covariance structure comprising evaluations of the kernel at grid spacings of the regular grid within the finite sampling window; and
   performing an inverse discrete Fourier transform on data comprising the covariance structure.

7. The method of any preceding claim, wherein generating the low-frequency covariance matrix comprises performing a discrete Fourier transform on a portion of the discretised power spectrum within the low-frequency range, to determine a low-frequency covariance structure; and
   arranging elements of the low-frequency covariance structure into a matrix.

8. The method of any preceding claim, wherein performing at least one of the discrete Fourier transforms comprises performing a fast Fourier transform

9. The method of any preceding claim, wherein performing at least one of the inverse discrete Fourier transforms comprises performing an inverse fast Fourier transform.

10. The method of any preceding claim, wherein the input data is time-series data, and the regular grid comprises a series of equal temporal intervals.

11. The method of any preceding claim, comprising:

   receiving the input data as a data stream; and
   processing the input data as the data stream is received by moving the finite sampling window over the input data and training respective sets of parameters sequentially for different positions of the finite sampling window.

12. A data processing system arranged to process input data comprising a plurality of samples arranged on a regular grid within a finite sampling window, to train parameters for a kernel of a Gaussian process for modelling the data, wherein the parameters are associated with a mixture of spectral components representing a spectral density of the kernel, the system comprising processing circuitry and memory circuitry,
   wherein the memory circuitry is arranged to store the plurality of samples, the parameters, intermediate data for training the parameters, and program code which, when executed by the processing circuitry, cause the system to:

   initialise the parameters;
   determine a cut-off frequency for delimiting a low-frequency range and a high-frequency range, the cut-off frequency being an integer multiple of a fundamental frequency corresponding to a reciprocal size of the sampling window;
   perform a discrete Fourier transform on the input data to determine frequency domain data;
   process a portion of the frequency domain data within the low-frequency range to determine smoothed input data; and
   iteratively:

      determine a discretised power spectrum for the kernel;
      generate a low-frequency covariance matrix from a portion of the discretised power spectrum within the low-frequency range;
      determine, using the smoothed input data and the low-frequency covariance matrix, a first log-likelihood component for the parameters given the smoothed input data;
      determine, using a portion of the discretised power spectrum within the high-frequency range, a second log-likelihood component for the parameters given a portion of the frequency domain data within the high-frequency range; and

modify the parameters to increase an objective function comprising the first log-likelihood component and the second log-likelihood component, wherein increasing the objective function increases a probability density associated with the parameters.

13. The data processing system of claim 12, comprising a receiver for receiving the data comprising the plurality of samples.

14. The data processing system of claim 12 or 13, wherein the processing circuitry comprises fast Fourier transform circuitry for performing the DFTs and the inverse DFTs.

15. A computer program product comprising instructions which, when executed by processing circuitry of a computer, cause the computer to perform the method of any of claims 1 to 11.

a)

b)

**Fig. 1**

200

Receiver — 202

Data buffer — 204

206

Samples

Intermediate data

Parameters

Memory circuitry

210

FFT circuitry

Processing circuitry — 208

# Fig. 2

**a)**

**b)**

## Fig. 3

Initialise parameters — S402

Determine cut-off frequency — S404

Determine frequency domain data — S406

Generate smoothed data — S408

Determine discretised power spectrum of kernel — S410

Generate low-frequency covariance matrix — S412

Determine log-likelihood components — S414

Update parameters — S416

*Fig. 4*

**Fig. 5**

**a)**

$\Delta_1$

0.10    0.15    0.20    0.25    0.30    0.35

Time/s

**b)**

$\Delta_2$

0.10    0.15    0.20    0.25    0.30    0.35

Time/s

*Fig. 6*

Europäisches
Patentamt

European
Patent Office

Office européen
des brevets

**EUROPEAN SEARCH REPORT**

Application Number

EP 19 20 2008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CRISTOBAL VALENZUELA ET AL: "Low-pass filtering as Bayesian inference", ARXIV.ORG, CORNELL UNIVERSITY LIBRARY, 201 OLIN LIBRARY CORNELL UNIVERSITY ITHACA, NY 14853, 9 February 2019 (2019-02-09), XP081027224, * abstract; figures 1-6 * * page 1, left-hand column - page 4, right-hand column * | 1-15 | INV. G06N20/10 G06F17/18 |
| A | ANTOINE LIUTKUS ET AL: "Gaussian Processes for Underdetermined Source Separation", IEEE TRANSACTIONS ON SIGNAL PROCESSING, IEEE SERVICE CENTER, NEW YORK, NY, US, vol. 59, no. 7, 2 July 2011 (2011-07-02), pages 3155-3167, XP011356113, ISSN: 1053-587X, DOI: 10.1109/TSP.2011.2119315 * abstract; figures 1-4 * * page 3155, left-hand column - page 3165, right-hand column * | 1-15 | |

TECHNICAL FIELDS
SEARCHED (IPC)

G06N
G06F

The present search report has been drawn up for all claims

| Place of search | Date of completion of the search | Examiner |
|---|---|---|
| The Hague | 17 March 2020 | Freitas, Arthur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3467717 A

- EP 3467718 A

**Non-patent literature cited in the description**

- **A. WILSON ; R. ADAMS.** Gaussian Process Kernels for Pattern Discovery and Extrapolation. *International Conference on Machine Learning,* 2013